# EUROPEAN PATENT APPLICATION

(11) **EP 4 596 210 A2**
(43) Date of publication of application: **06.08.2025**
(21) Application number: 25154885.5
(22) Date of filing: 30.01.2025
(51) Int. Cl.: B29C 45/14, B60R 13/02, B29C 45/00, B29L 31/30

(54) **METHOD OF MAKING PRESS-MOLDED PARTS WITH BACK INJECTION MOLDED ELEMENTS**

(30) Priority: 30.01.2024 US 202418427334
(71) Applicant: Gemini Group, Inc., Bad Axe, MI 48413 (US)
(72) Inventor: ROBINSON, Mark, Bad Axe, 48413 (US); HASS, Adam, Bad Axe, 48413 (US); ESSENMACHER, Barry, Bad Axe, 48413 (US); RUSSELL, Adam, Bad Axe, 48413 (US); AHEARN, Frank, Bad Axe, 48413 (US); WICHERT, Garrett, Bad Axe, 48413 (US); GRANZ, Nick, Bad Axe, 48413 (US)
(74) Representative: Ström & Gulliksson AB

(57) **Abstract**

A method of manufacturing molded parts having back injection molded features is operable to make decorative panels for vehicle applications. A single workstation can heat a substrate, locate the heated substrate in a tool, load a cover stock on the substrate while in the tool, insert a buffer layer over the cover stock, close the tool, inject a resin to form ribbing, clip towers, locators, and/or attachment features, cool the part, and then open the tool to eject the completed part. The enhanced manufacturing processes reduces tooling cost and inherent energy usage.

## Description

### FIELD OF TECHNOLOGY

The present disclosure pertains to a method of manufacturing compression molded parts having back injection molded features, a tool for injection molding the parts, and parts that are manufactured using the disclosed method. The parts are, for example, but not limited to, vehicle, aircraft, marine, and other commercial parts, including flooring, panels, bolsters, pillars, roofing, hoods, wings, fuselage, hauls, bulkheads, and the like.

### BACKGROUND

Manufacturing load structures and other plastic parts using injection molding techniques is a process deployed to make component parts for a host of industries. Load structures are incorporated in various applications, for example, as floors, roofing, hoods, and the like, in automobiles and other transportation devices. Other load structures such as decorative panels, pillars, liftgate bolsters, door bolsters, seatbacks and side panels can be made via a multi-step injection molding process using multiple machines. The load structures generally are panels having a first side, which may be visible, and a second side, that may be concealed. In some applications, the visible side (sometimes referred to as the "A-side") may be carpeted, and the concealed side (sometimes referred to as the "B-side") may be left bare or have scrim, such as felt, added thereto. The method of making such structures typically requires multiple injection molding steps to generate a finished part.

Such load structures may be installed in locations to provide support, structural integrity, while reducing weight in the vehicle. Traditional load structures are thick, bulky, and heavy which is not desirable. Other traditional load structures may be thin and flimsy and thus lack stability and structural support on their own and may require additional additive support features, brackets, braces, etc., to meet structural and other design requirements. Such structures may further require additional clips or fastening members so as to permit the structure to be held in place relative to other components of a system. For example, many assemblies require additional securing arrangements to be added to the molded part in order to secure the finished part to a sub-assembly of a vehicle. Such arrangements increase assembly costs, increase the number of required parts, and increase manpower costs associated with the assembly process.

Accordingly, an improved method of manufacturing a molded part, an improved injection molded part, and an improved tool, are provided.

### OVERVIEW

The disclosure includes a method of making molded parts with back injection molded features. In one embodiment, the method comprises heating a substrate (e.g., polypropylene (PP) glass) including an adhesive (e.g., PP film), opening a tool, locating the heated substrate in the tool (e.g., a cold tool), loading a cover stock (e.g., carpet/felt/vinyl) on the substrate in the tool, adding a buffer layer, closing the tool, injecting a resin (e.g., Talc filled PP) through the tool to form ribbing, clip tower, and/or attachment features with the substrate, cooling the part (e.g., part can be cooled in two phases (i) first phase includes setting the substrate (e.g., few seconds) and (ii) second phase includes cooling the injected resin), and then opening tool to eject the completed part.

In another embodiment, a single manufacturing station is used to place cover stock such as carpet on a substrate. While in the mold a single shot of resin is injected on the back of the substrate to provide reinforcement of the resulting part along with providing standoffs for attachment features. At this single station, the substrate is heated and placed on tool first, then carpet is overlayed on top of the substrate, the tool is closed, and then the back side is injection molded. This single station/step process reduces the need for multiple machine operations, multiple machines, or multiple people to make the same part that used to be made using multiple steps.

Another embodiment includes a method of molding a part having back injection molded structural features, the manufacturing steps may include:
1) Heating a thermo-plastic sheet (substrate) to a predetermined temperature.
2) Transferring the heated sheet to a tool of an injection molding machine.
3) Cooling a portion of the tool to a predetermined temperature.
4) Placing a cover material (carpet) on the heated side of a sheet.
5) Closing the press of the injection molding machine.
6) Providing press tonnage adequate in size to form and trim the substrate plus the carpet (collectively the part) and remain closed during an injection step.
7) Keeping the press closed until the substrate and carpet are cooled to a desired temperature.
8) After the formed/trimmed part has cooled, the injection process is started.
9) Initiate injection molding process, while mold is still closed, to form features on the back side of the part that:
   a. Provide stiffness (structure) to the part allowing less substrate material to be used.
   b. Provide rib structures that have a dual purpose; the rib structures serve as pathways for the injected resin as well as rib structures solidify and become reinforcement members.
   c. Provide location features to enhance part alignment and retention once the part is installed.
   d. Provide geometry (offset features) for mechanical attachment components to be added, i.e., metal clips or Christmas trees.
10) The press remains closed until the injected resin has cooled to a desired temperature.
11) Open press and the now completed formed molded part is removed from the injection molding tool.
12) Add fasteners to the offset features on the completed molded formed part.
13) Install finished molded part in/on a vehicle, aircraft, marine device.

Another embodiment includes an injection molding tool that is operable to be deployed using the aforementioned methods of operation.

### BRIEF DESCRIPTION OF THE DRAWINGS

Referring now to the drawings, illustrative embodiments are shown in detail. Although the drawings represent some embodiments, the drawings are not necessarily to scale and certain features may be exaggerated, removed, or partially sectioned to better illustrate and explain the present disclosure. Further, the embodiments set forth herein are not intended to be exhaustive or otherwise limit or restrict the claims to the precise forms and configurations shown in the drawings and disclosed in the following detailed description.
FIG. 1A is a front view of a vehicle, showing use of a molded part in one aspect of a vehicle;
FIG. 1B is a rear view of a vehicle, showing use of a molded part in one aspect of a vehicle;
FIG. 1C is a side view of a vehicle, showing use of a molded part in one aspect of a vehicle;
FIG. 1D is a top view of a vehicle, showing use of a molded part in one aspect of a vehicle;
FIG. 2 is a perspective view of a molded part, showing the finished side;
FIG. 3 is a perspective view of the FIG. 2 molded part, showing the back side of the part;
FIG. 4 is a side profile view of a molded part;
FIG. 5 is an enlarged perspective view of the back side of the molded part;
FIG. 6 is another side profile view of the molded part, showing attachment features connected to the molded offsets;
FIG. 7 is another perspective view of an alternative molded part, showing the back side with a plurality of reinforcement members and attachment features;
FIG. 8 is a side view, taken from circle 8-8 of FIG. 7, showing a clip connected to an offset feature;
FIG. 9 is a side profile view of the mold for making the injection molded part shown in Fig. 2; and
FIG. 10 is a flow chart showing the steps for making an injection molded part.

### DETAILED DESCRIPTION OF THE EMBODIMENTS

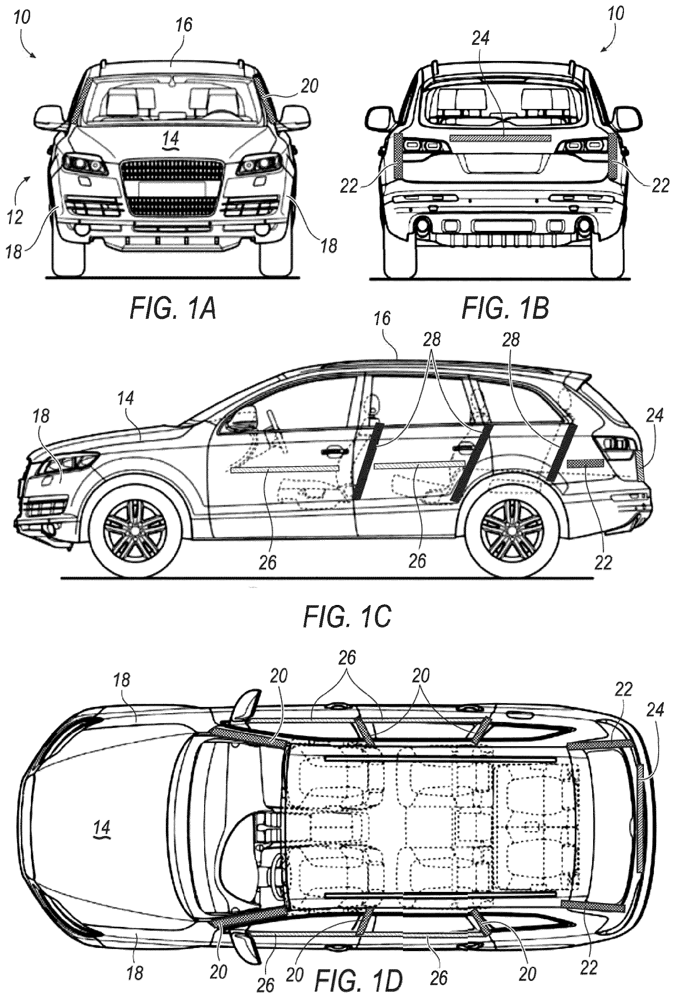

FIGS. 1A-1D illustrate a vehicle 10 that could deploy the completed injected molded part 12 that is made by the methods that are disclosed herein. It will be appreciated that while a vehicle 10 is illustrated, that the completed injection molded part 12 having injection molded features on the back of the part could be used in other machinery such as aircraft, boats, trains, and in a host of industrial, commercial and residential applications.

FIG. 1A illustrates a front view of a vehicle 10 which includes a hood 14, a roof 16, a side panel 18, and pillars 20 that are located at three places on each side of the vehicle 10. FIG. 1B is a rear view of a vehicle 10 which includes a pair of rear side panels 22 and a liftgate bolster 24. FIG 1C is a side view of the vehicle 10 and the vehicle 10 may include door bolsters 26 at the driver side, and at the passenger side of the vehicle. A seat back bolster 28 is provided behind the front row set of seats, the second-row passenger seats, and the cargo seats. FIG. 1D is a top view of the vehicle 10 that illustrates the location of the aforementioned pillars, panels and bolsters.

The hood 14, roof 16, side panels 18, pillars 20, rear side panels 22, liftgate bolster 24, door bolsters 26 and seat back bolsters 28 may be made using the disclosed method of manufacturing an injected molded part 12 having back injected molded features. It will be appreciated that other parts 12 that are on or in a vehicle, such as interior trim parts, may be made using the methods disclosed herein.

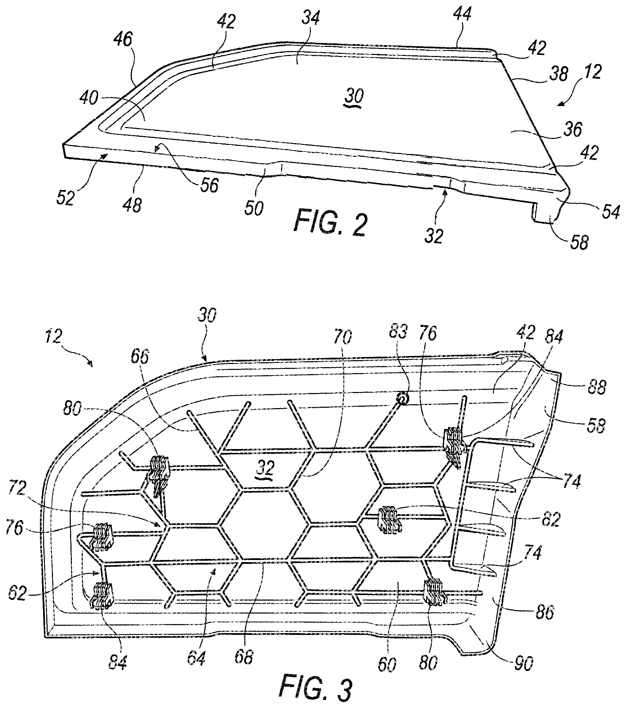

FIG. 2 illustrates an injection molded part 12 having injection molded features on the back side of the completed part. The part 12 has an A-Side 30 that represents the outside finished surface that the consumer sees, and a B-Side 32 which is the back side of a part which has the non-finished surface, rib members, offsets and locations for clips to be mounted. The A-Side 30 includes a flat finished portion 34 that includes carpet 36 or other finished material. The carpet 36 may extend from a first edge 38 to an opposing side (or end) 40 where a recess 42 is located. The recess 42 may be positioned between an edge of the carpet 36 and a second edge 44, a third edge 46, and a fourth edge 48. The edges collectively define a periphery 50 of the part 12.

The part 12 has a first thickness 52 at the opposing side 40 and a second thickness 54 located at another end. A top ridge 56 extends around the periphery 50 of the part 12 and is located between the recess 42 and the second edge 44, third edge 46, and fourth edge 48. The ridge 56 can be a finished flat surface. The carpet 36, however, may extend across the entire flat surface 34 (or a flat finished portion 34), the recess 42, the ridge 56, and be wrapped around the edges 38, 44, 46 and 48 to provide an edge-wrapped finished part 12 to meet customer's needs. Such design will provide a part 12 that is completely finished with a carpet or other desired decorative finished surface.

The first edge 38 may include a downwardly extending member or protrusion 58 that extends towards the B-Side 32 of the part 12. The protrusion 58 may extend along an entire length of the first edge 38. The protrusion 58 may be for extending the part 12 into other geometry in a surrounding assembly of the vehicle 10. It will be appreciated that the carpet 36 may not be edge-wrapped or the carpet 36 may be located only on limited portions of the A-Side 30.

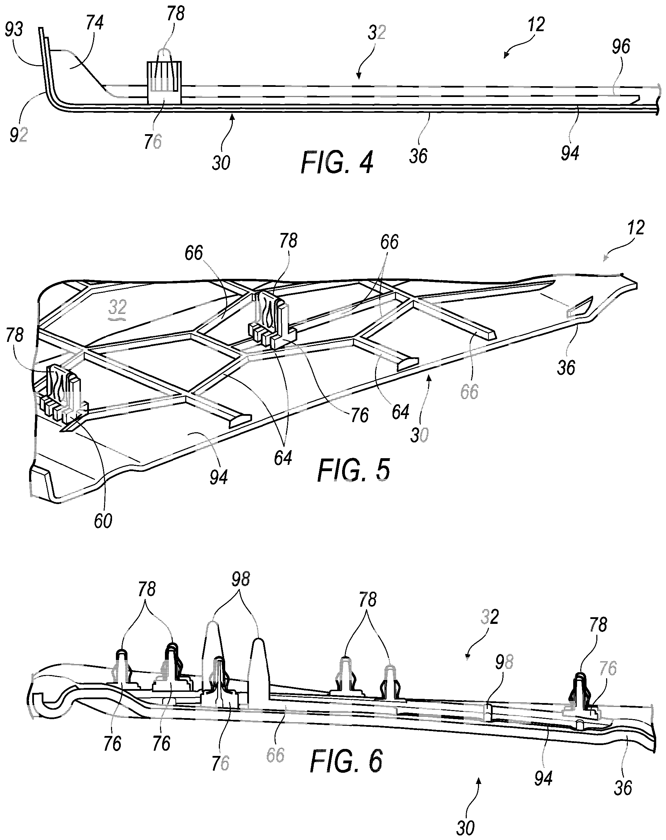

FIG. 3 illustrates the B-Side 32 of the part 12 which includes a flat portion (or surface) 60 of a substrate of the part 12. The B-Side 32 shows a support and reinforcement system 62 that is back injection molded during the processing step. The reinforcement system 62 includes a labyrinth 64 of injected molded outwardly extending runners 66, horizontal runners 68, octagon shaped runners 70, intersections of runners 72, ribs 74, and offsets 76. The offsets 76 are outwardly extending members (extending away from the flat portion 60) that are configured to receive clips 78 (FIG. 4). The offsets 76 may be located at intersections 80 on runners 72, at horizontal locations 82 on runners, and can be located at opposing corners 84 of the part 12 so as to provide mounting locations for clips 78 to be installed. Six offsets 76 are illustrated but it will be appreciated that more or less offsets 76 can be provide.

The offsets 76 are formed as part of the reinforcement system 62 and the offsets 76 are located on and integral with the runners 64. The offsets 76 are injected molded during the same step as the runners 64. The same tool is used to injection mold the runners 64 and the offsets 76, and runners 64 and the offsets 76 are interconnected to form the labyrinth 64 of back injected molded components on the B-Side 32 of the part 12. The runners extend outwardly 66 and terminate at an end portion 83 near the recess 42 which can be seen on the B-Side 32. A plurality of ribs 74 are formed during the molding step and the plurality of ribs 74 provide reinforcement for the flange 86 that extends outwardly at the protrusion 58. The flange 86 may extend from a Point A 88 to a Point B 90.

FIG. 4 illustrates a side profile view of the completed injected molded part 12. Carpet 36 is located on the A-Side 30 of the part 12 and the carpet 36 is shown wrapped around 92 an outside edge 93. The carpet 36 is positioned adjacent to a substrate 94 and below the injected molded layer 96. The B-Side 32 as the injected molded layer 96 extending upwardly therefrom along with the ribs 74. The offset 76 is integral with the injection molded layer 86. A clip 78 is located on top of the offset 76 and forms a mounting arrangement that is connected to a component the vehicle 10, or some other sub-assembly (not shown).

FIG. 5 illustrates an enlarged perspective view of the B-Side 32 of the part 12 showing an offset 76 on a runner 66. A clip 78 made of plastic or metal slides over the top of an upper portion of the offset 76. The runner 66 has a width w and a height *h* and extends a length *l* along the upper flat surface 60 of the substrate 94.

FIG. 6 is another side profile view of a completed part 12 showing a substrate 94, carpet 36 positioned over the substrate 94, and the reinforcement system 62 on the B-Side 32. A plurality of offsets 76 are positioned on the substrate 94, and runners 66 extend between the offsets 76 connecting them to provide strength and rigidity to the finished part 12. The advantage of this arrangement is that lighter, thinner, substrate 94 may be utilized. Clips 78 are inserted on each of the offsets 76 to provide mounting arrangements for the part 12 to be fastened to an adjacent part on the vehicle 10.

In the FIG. 6 embodiment, locators 98 are injection molded and formed during the injection molding process. The locators 98 are connected to runners 66 like the offsets 76 are connected to the runners 66. The locators 98 may have a height taller than the offsets 76, or the locators 98 can be shorter than the offsets 76. The locators 98 are operable to guide the part 12 in place during an installation step, wherein the end tip of the locator 98 is received within a corresponding recess in an adjacent part, which facilitates a worker or robot when assembling the part 12 to the vehicle 10. It will be appreciated that a plurality of locators 98 may be created during the injection molding process and positioned about the B-Side 32 to aid in the assembly process.

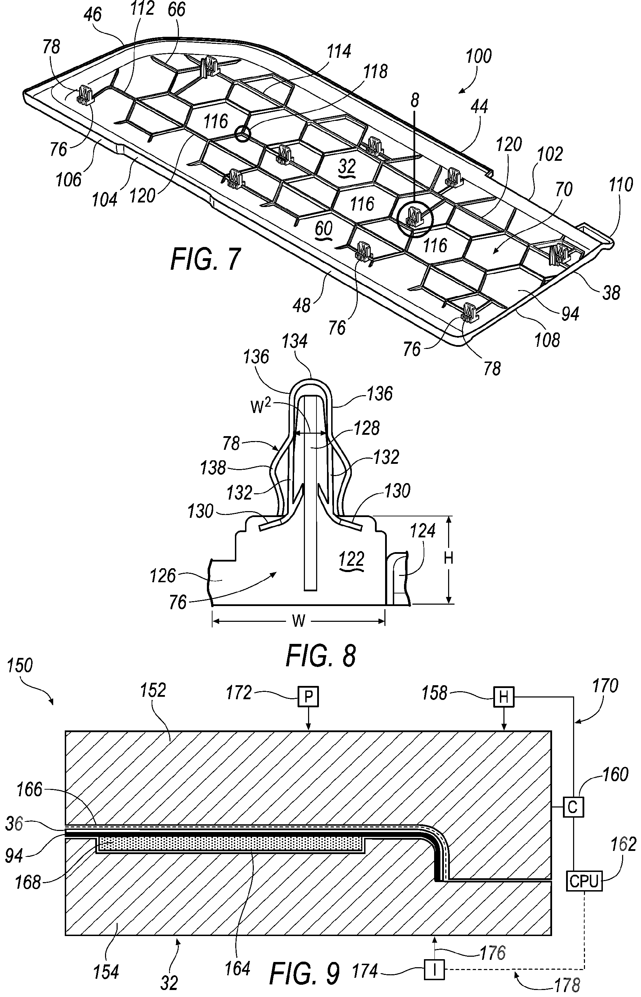

FIG. 7 is an alternative embodiment illustrating a plastic injection molded part 100 having reinforcements members injection molded on the B-Side 32. Where possible, like numbers are used in this new embodiment. The part 100 has first edge 38, a second edge 44, a third edge 46 and a fourth edge 48. The part 100 has a substantially flat surface 60 due to the planar substrate 94, with notches 102 and 104 formed in the outer periphery 106. The part 100 has a uniform thickness 108 and an outwardly extending flange 110.

Parallel extending runner systems 112 and 114 extend the length of the part 100 and form a network of support runners 116 that are interconnected 118 to one another. The runner systems 112 and 114 have longitudinally extending runners 120 that extend nearly the entire length of the part 100.

FIG. 8 is an enlarged side profile view taken from circle 8-8 of FIG. 7. An offset 76 is presented with a retainer, fastener or clip 78 disposed thereon. The offset 76 includes a base 122, a first runner portion 124, a second runner portion 126, and an upwardly extending uniformly shaped upper portion 128. The offset 76 has a width w, a height h, and a second width w2 located at the upper portion 128. The offset 76 is molded to and is part of the runner portions 124 and 126.

The clip 78 is a unitary component and the clip 78 includes a pair of legs 120 that extend outwardly and inwardly, vertical portions 132, and a top 134. Extending downwardly from the top 134 are side members 136 which transition into biasing members 138 that act as compression springs to bias against the width *w2* of the upper portion 128 of the offset 76.

FIG. 9 illustrates a side section view of an exemplary mold / tool that can be used to manufacture parts 12 and 100. The mold or tool 150 includes an upper tool 152, a lower portion (or a lower tool) 154, and a parting line 166. A heater 158 and a cooler 160 are connected to the upper tool 152 and the lower portion 154, respectively, and a computer (or central processing unit (CPU)) 162 is connected to control the operation of the mold 150, heater 158 and cooler 160. The heater 150 is operable to heat the upper tool 152 on demand to a certain desired temperature range. The cooler 160 is operable to cool the lower portion 154 to a desired temperature range.

When the mold 150 is opened by a press 172, the substrate 94 is positioned within a mold cavity 164. Carpet 36 is placed over the substrate 94, and a buffer layer 166 is positioned on top of the carpet 36 layer. After the mold 150 is closed as is shown in the FIG. 9, the injection molding process is activated, molten plastic is introduced in the mold to the B-Side 32 to form an injection molded component 168. The injection molded component 168 melts to the surface of the substrate 94 and the injection molded component 168 and the substrate 94 are bonded together. The injection molded component 168 may include, for example, the runners 66, offsets 76, and locators 98.

The buffer layer 166 acts as a buffer between the carpet 36 and the inner cavity surface of the upper tool 152. The buffer layer 166 has a thickness t of about .010 inches and the buffer layer 166 is made of A mesh material. The buffer layer 166 may silicone bonded to cover the stock side of the tool 150. In another example, the buffer layer 166 may also be made of grain in the surface of the tool 150. The buffer layer 166 has a length *l* and width *w* that is about the same dimension as the length and width for the carpet 36. The downward pressure force that is applied when the press 172 closes the upper tool 152 impinges on the buffer layer 166 and the buffer layer 166 dissipates the downward force due the placement of the buffer layer 166 between the tool and the carpet 36.

The buffer layer 166 further has the advantage of dissipating an acting force that is caused from the injection molded step. The upward force caused by the molten plastic introduced into the mold cavity 164 that fills and forms the injection molding component 168, causes pressure build up on the B-Side 32, thus applying pressure on the substrate 94 and in turn on the carpet 36. By having the buffer layer 166 disposed between the carpet 36 and the upper tool 152, the pressure is buffered or absorbed which prevents witness lines that can occur if the buffer layer 166 is not utilized. By preventing witness lines on the carpet 36 of the finished part, the number of defective parts are reduced and customers are satisfied due to no witness lines being present. A witness line is a scuff, burn, detent, shading, deformation of the carpet 36 that may occur due to displacement of the carpet 36 caused by the upper tool 152 engaging and displacing the carpet 36.

A heating / cooling circuit 170 is provided that is operable to turn off the heater 158 and turn on the cooler 160. A resin injection unit 174 is clamped to the lower portion 154 and is operable to provide molten resin 176 to the mold cavity 164. The CPU 162 communicates 178 with the resin injection unit 174 to control the resin flow.

A method of making molded parts with back injection molded features is presented. In one embodiment, the method comprises heating a substrate (e.g., polypropylene (PP) glass) including an adhesive (e.g., PP film), opening a tool, locating the heated substrate in the tool (e.g., a cold tool), loading a cover stock (e.g., carpet/felt/vinyl) on the substrate in the tool, inserting a buffer layer over the cover stock, closing the tool, injecting a resin (e.g., Talc filled PP) thru the tool to form ribbing, clip tower, and/or attachment features with the substrate, cooling the part (e.g., part can be cooled in two phases (i) first phase includes setting the substrate (e.g., few seconds) and (ii) second phase includes cooling the injected resin), and then opening tool to eject the completed part.

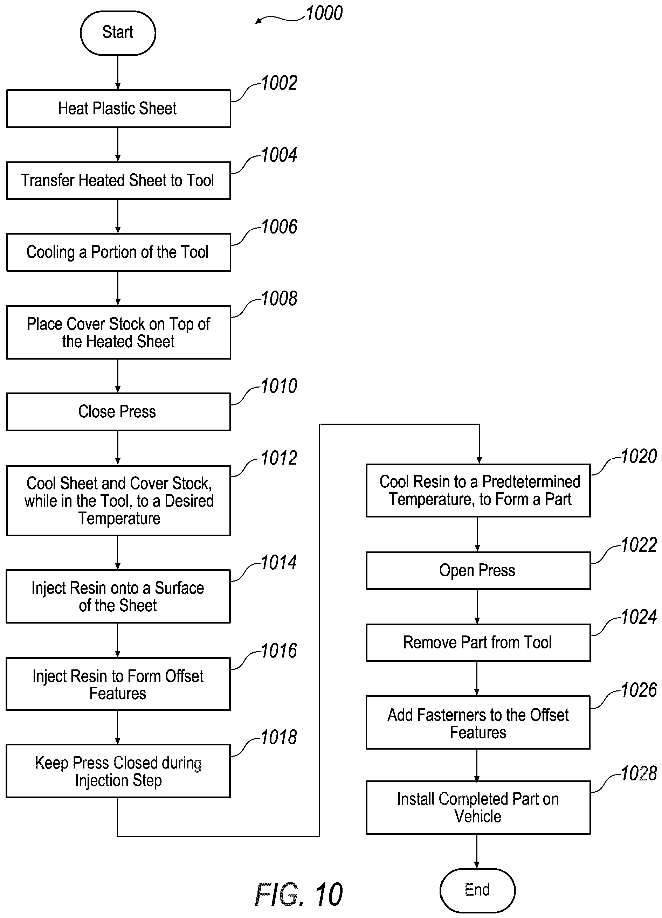

FIG. 10 is a flow chart illustrating another exemplary embodiment of a method 1000 of making injection molded parts 10 or 100 with back injection molded features / components 168. The method may include some, all, or more than the following steps:
Step 1-Heating 1002 a thermo-plastic sheet / substrate 94 to a temperature in the range of 340°F to 420°F. The heat source may be contact, Infra-Red, or Radiant.
Step 2- Transferring 1004 the heated sheet to a tool either manually or mechanically and laying it evenly on a surface of the lower tool.
Step 3- Cooling 1006 a portion of the tool, possibly the injection side or the B-Side (non-cosmetic side) to a temperature in the range of 80°F to 120°F.
Step 4-Placing 1008 a cover material (i.e., carpet) on the heated sheet, either manually or mechanically.
Step 5- Applying a buffer layer over the carpet.
Step 6- Closing 1010 the tool with a press.
Step 7- Maintaining press tonnage to be of adequate size to form and trim the heated sheet plus the carpet to a desired shape.
Step 8-Keeping the press closed until the heated sheet and carpet are cooled 1012 to the range of 80°F to 120°F.
Step 9-Injecting resin 1014 onto surface of the sheet to form runners which served as pathways for the injected resin. The runners further provide stiffness (structure) to the substrate allowing less substrate material to be used. An injection unit may be clamped to the lower tool.
Step 10- Continuing to inject resin onto surface of sheet to form features that:
   a. Provide rib structures for reinforcement.
   c. Provide location features form alignment and retention.
   d. Provide geometry (offset features) for mechanical attachment components to be added, i.e., clips or Christmas trees.
Step 11- Keeping press closed 1018 during the injection steps until the resin has cross-linked.
Step 12 - Cooling 1020 the injected resin to a range of 80°F to 120°F. This helps with removal of the part from the tool.
Step 13 - Opening press 1022.
Step 14 - Removing part 1024 from tool.
Step 15- Adding fasteners / clips 1026 to the offset features.
Step 16- Installing completed part 1028 in/on a vehicle, aircraft, marine device.
Step 17 - The End.

An alternative method of making molded parts with back injection molded features, is provided to have the carpet be placed in the tool on the lower half. In this scenario, the press set up is inverted, and the upper tool 152 is the B-Side and lower portion 154 is the A-Side. For this alternative method, the steps would require placing the injection tooling in the upper tool of the press.

For thermoset substrate applications, the tool will have hot and cold capabilities. A valve gate system with heated runners may be provided in order to sequentially fill the injection geometry.

The method 1000 offers an advantage of deploying a single station to place a substrate in a mold, apply a cover stock (carpet) in the mold on the substrate, and introduce a single shot of resin on the back side of the substrate to form attachment features and reinforcement members. This single step process occurs at one station and reduces the need for multiple machine operations, multiple machines, or multiple people to make the same part wherein previously such required multiple steps and machines.

It will be appreciated that the aforementioned methods, tools and parts may be modified to have some components and steps removed, or may have additional components and steps added, all of which are deemed to be within the spirit of the present disclosure. Even though the present disclosure has been described in detail with reference to specific embodiments, it will be appreciated that the various modifications and changes can be made to these embodiments without departing from the scope of the present disclosure as set forth in the claims. The specification and the drawings are to be regarded as an illustrative thought instead of merely restrictive thought.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The disclosure will hereafter be described in numbered clauses.
1. A method of making injection molded parts having back injection molded features, comprising:
   providing a substrate and cover material;
   heating the substrate to a temperature in a range of about 340°F to 420°F;
   transferring the heated substrate to a tool and laying the substrate evenly on a surface of the tool;
   cooling a portion of the tool to a temperature in the range of about 80°F to 120°F;
   placing the cover material on the heated substrate;
   placing a buffer layer over the cover material;
   closing the tool;
   keeping the tool closed until the heated substrate and cover material are cooled to the range of about 80°F to 120°F;
   injecting resin onto a surface of the substrate to form runners;
   injecting resin onto the same surface of the substrate to form attachment features;
   keeping the tool closed during the injection steps until the resin has cross-linked;
   cooling the injected resin to a range of 80°F to 120°F; and
   open the tool and remove a completed part.
2. The method according to clause 1, wherein the method is performed at a single injection molding station.
3. The method according to clause 1 or 2, wherein the step of heating the substrate is performed by one of contact, Infra-Red, or Radiant heating processes.
4. The method according to any of the preceding clauses, wherein the runners and the attachment features are connected and provide rigidity to the substrate.
5. The method according to any of the preceding clauses, wherein the cooling step includes cooling a B-Side of the tool.
6. The method according to any of the preceding clauses, wherein the cover material is a decorative layer, carpet or felt.
7. The method according to any of the preceding clauses, further comprising once the tool is closed, press tonnage is maintained to form and trim the heated substrate and the cover material to a desired shape.
8. The method according to any of the preceding clauses, wherein the runners serve as pathways for the injected resin to flow.
9. The method according to any of the preceding clauses, wherein the runners provide stiffness to the substrate allowing less substrate material to be used.
10. The method according to any of the preceding clauses, wherein the injecting resin step further includes making rib structures which reinforce the completed part.
11. The method according to any of the preceding clauses, further comprising injecting resin to the same surface to generate location features, the location features fluidly connect with the runners and attachment features during the injecting resin step.
12. The method according to any of the preceding clauses, further comprising adding fasteners or clips to the offset features.
13. The method according to any of the preceding clauses, further comprising installing the completed part in or on a vehicle, aircraft, watercraft, or train.
14. The method according to any of the preceding clauses, wherein the completed part is at least one of: flooring, panels, roofing, hoods, wings, fuselage, hauls, bulkheads, hoods, roof, side panels, pillars, rear side panels, liftgate bolster, door bolsters or seat back bolsters.
15. The method according to any of the preceding clauses, wherein the method is performed at a single workstation from a beginning of a process to an end of the process.
16. The method of any of the preceding clauses, wherein the step of placing the buffer layer over the cover material steps provides a buffer to absorb pressure that is generated during the injecting resin steps, and the layer is operable to reduce witness lines on the cover material.
17. The method according to any of the preceding clauses, further comprising the step of injecting resin to form alignment members that are fluidly connected to the runners.
18. The method according to any of the preceding clauses, wherein the completed part has an A-Side and a B-Side, the A-Side is a finished side in which the cover material is located, the B-Side is an unfinished side where the runners and attachment features are located, wherein the runners and attachment features cannot be visibly seen on the A-Side.
19. A method of injection molding parts, comprising:
   heating a sheet of material to a desired temperature;
   transferring the sheet of material to an injection molding workstation having an injection molding tool and a press;
   wherein the injection molding workstation is operable to perform the following operations:
      cool a portion of the injection molding tool to a preferred temperature range;
      place a cover material on the sheet of material;
      place a buffer layer over the cover material;
      close the tool;
      keep the tool closed until the sheet of material and cover material are cooled to a predetermined temperature range;
      inject resin onto a surface of the sheet of material to form runners and attachment features;
      keep the tool closed during the injection step;
      cool the injected resin to a predetermined range; and
      open the tool to remove a completed part.
20. A method of injection molding parts using an injection molding tool and a press, the parts having molded features on a back of the part to provide reinforcement and to provide spaces for fasteners to be mounted, the method comprising:
   heating a sheet of material to a desired temperature;
   transferring the sheet of material into the injection molding tool;
   cooling a portion of the injection molding tool to a preferred temperature range;
   locating a decorative material on the sheet of material;
   locating a buffer layer over the decorative material;
   closing the tool and forming the sheet of material;
   keeping the tool closed until the sheet of material and decorative material are cooled;
   injecting resin onto a surface of the sheet of material to form runners and attachment features;
   keeping the tool closed during the injection step;
   stop injecting resin;
   cooling the injected resin; and
   opening the tool and removing a completed part.

## Claims

1. A method of making injection molded parts having back injection molded features, comprising:
providing a substrate and cover material;
heating the substrate to a temperature in a range of about 340°F to 420°F;
transferring the heated substrate to a tool and laying the substrate evenly on a surface of the tool;
cooling a portion of the tool to a temperature in the range of about 80°F to 120°F;
placing the cover material on the heated substrate;
placing a buffer layer over the cover material;
closing the tool;
keeping the tool closed until the heated substrate and cover material are cooled to the range of about 80°F to 120°F;
injecting resin onto a surface of the substrate to form runners;
injecting resin onto the same surface of the substrate to form attachment features;
keeping the tool closed during the injection steps until the resin has cross-linked;
cooling the injected resin to a range of 80°F to 120°F; and
open the tool and remove a completed part.

2. The method according to claim 1, wherein the step of heating the substrate is performed by one of contact, Infra-Red, or Radiant heating processes.

3. The method according to claim 1 or 2, wherein the runners and the attachment features are connected and provide rigidity to the substrate.

4. The method according to any of the preceding claims, wherein the cooling step includes cooling a B-Side of the tool.

5. The method according to any of the preceding claims, wherein the cover material is a decorative layer, carpet or felt.

6. The method according to any of the preceding claims, further comprising once the tool is closed, press tonnage is maintained to form and trim the heated substrate and the cover material to a desired shape.

7. The method according to any of the preceding claims, wherein the runners serve as pathways for the injected resin to flow.

8. The method according to any of the preceding claims, wherein the runners provide stiffness to the substrate allowing less substrate material to be used.

9. The method according to any of the preceding claims, wherein the injecting resin step further includes making rib structures which reinforce the completed part.

10. The method according to any of the preceding claims, further comprising injecting resin to the same surface to generate location features, the location features fluidly connect with the runners and attachment features during the injecting resin step.

11. The method according to any of the preceding claims, further comprising adding fasteners or clips to the offset features.

12. The method according to any of the preceding claims, wherein the completed part is at least one of: flooring, panels, roofing, hoods, wings, fuselage, hauls, bulkheads, hoods, roof, side panels, pillars, rear side panels, liftgate bolster, door bolsters or seat back bolsters.

13. The method according to any of the preceding claims, wherein the step of placing the buffer layer over the cover material steps provides a buffer to absorb pressure that is generated during the injecting resin steps, and the layer is operable to reduce witness lines on the cover material.

14. The method according to any of the preceding claims, further comprising the step of injecting resin to form alignment members that are fluidly connected to the runners.

15. A method of injection molding parts using an injection molding tool and a press, the parts having molded features on a back of the part to provide reinforcement and to provide spaces for fasteners to be mounted, the method comprising:
heating a sheet of material to a desired temperature;
transferring the sheet of material into the injection molding tool;
cooling a portion of the injection molding tool to a preferred temperature range;
locating a decorative material on the sheet of material;
locating a buffer layer over the decorative material;
closing the tool and forming the sheet of material;
keeping the tool closed until the sheet of material and decorative material are cooled;
injecting resin onto a surface of the sheet of material to form runners and attachment features;
keeping the tool closed during the injection step;
stop injecting resin;
cooling the injected resin; and
opening the tool and removing a completed part.
